**Europäisches Patentamt**

**European Patent Office**

**Office européen des brevets**

(19)

(11) Numéro de publication: **0 068 572**
**B1**

(12) # FASCICULE DE BREVET EUROPEEN

(45) Date de publication du fascicule du brevet:
**08.10.86**

(51) Int. Cl.⁴: **G 01 S 7/06,** G 01 S 7/12

(21) Numéro de dépôt: **82200757.1**

(22) Date de dépôt: **18.06.82**

(54) Dispositif de synchronisation destiné notamment à une unité de visualisation d'un radar à impulsions.

(30) Priorité: **24.06.81 FR 8112413**

(43) Date de publication de la demande:
**05.01.83 Bulletin 83/1**

(45) Mention de la délivrance du brevet:
**08.10.86 Bulletin 86/41**

(84) Etats contractants désignés:
**DE FR GB IT NL SE**

(56) Documents cités:
**DE - A - 1 614 778**
**FR - A - 2 129 713**
**GB - A - 756 845**
**US - A - 2 745 036**
**US - A - 2 761 131**
**US - A - 4 058 810**

(73) Titulaire: **SOCIETE D'OPTIQUE, DE MECANIQUE D'ELECTRICITE ET DE RADIO O.M.E.R.A. - S.E.G.I.D., 49, rue Ferdinand Berthoud, F-95101 Argenteuil (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB IT NL SE**

(72) Inventeur: **Jolly, Claude, Société Civile S.P.I.D. 209, rue de l'Université, F-75007 Paris (FR)**

(74) Mandataire: **Chaffraix, Jean et al, Société Civile S.P.I.D. 209, rue de l'Université, F-75007 Paris (FR)**

## Description

La présente invention concerne un dispositif de synchronisation destiné notamment à une unité de visualisation d'un radar à impulsions, dispositif comportant une borne de sortie pour fournir un signal dit de démarrage à un instant bien déterminé avant un signal dit d'activation qui est appliqué à une première de ses bornes et dont l'apparition dépend d'un signal initial appliqué à une deuxième des bornes d'entrée antérieurement au signal de démarrage, ces différents signaux survenant durant des laps de temps successifs.

Un tel dispositif ne trouve des applications que dans le cas où les fluctuations de la durée de l'intervalle de temps compris entre l'apparition du signal initial et celle du signal d'activation sont lentes par rapport aux temps qui séparent les laps de temps successifs.

On rencontre ce cas dans les radars du type comportant un modulateur dont l'entrée reçoit le signal initial et à la sortie duquel apparaît le signal d'activation pour un magnétron destiné à fournir dans l'espace des impulsions de très haute fréquence et comportant, pour visualiser les échos desdites impulsions, une unité de visualisation formée d'un tube cathodique à balayage magnétique et munie d'une entrée pour signal de démarrage. Le dispositif doit fournir l'impulsion de démarrage à l'unité de visualisation, de sorte que le balayage soit commencé un peu avant qu'une impulsion à très haute fréquence ne soit émise. Ainsi, à l'émission de l'impulsion, les transitoires du balayage ont disparu et le balayage est bien linéaire; on obtient, alors, une image visualisée dépourvue de distorsions. Cet instant de démarrage doit être indépendant du temps de réponse du modulateur, c'est-à-dire du temps qui sépare le signal initial du signal d'activation. En effet, ce temps de réponse dépend surtout du vieillissement du modulateur et aussi de la température. Ces paramètres varient bien plus lentement que les laps de temps dont il a été question ci-dessus.

Pour s'affranchir de ces fluctuations, un dispositif du genre mentionné dans le préambule est remarquable en ce qu'il est constitué par un asservissement formé d'un circuit de retard variable muni d'une commande de retard, pour fournir le signal de démarrage en retardant le signal initial, d'un comparateur pour agir sur ladite commande en comparant à une grandeur de consigne le signal de sortie d'un circuit-mémoire et d'un circuit de mesure de temps pour fournir au circuit-mémoire la mesure du temps qui s'écoule entre le signal de démarrage et le signal d'activation, ladite grandeur de consigne correspondant à l'intervalle compris entre ledit instant bien déterminé et ledit signal d'activation.

La description suivante faite en regard des dessins annexés, le tout donné à titre d'exemple non limitatif, fera bien comprendre comment l'invention peut être réalisée.

La figure 1 représente le schéma d'un dispositif conforme à l'invention.

La figure 2 représente la répartition dans le temps du signal initial, d'activation et de démarrage.

La figure 3 montre le mode de réalisation préféré de l'invention.

La figure 4 est un diagramme temps destiné à l'explication du fonctionnement du dispositif de l'invention.

La figure 5 représente le schéma d'un radar comportant un dispositif de l'invention.

La figure 6 montre l'allure du courant de balayage pour l'unité de visualisation contenue dans le radar de la figure 5.

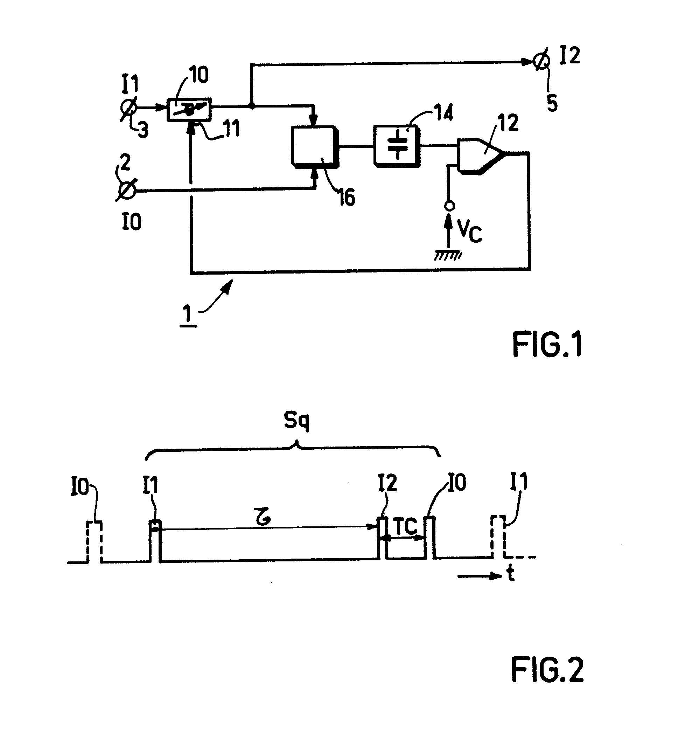

Le dispositif de l'invention représenté à la figure 1 porte la référence 1; à sa première borne d'entrée 2, on applique un signal dit d'activation qui est représenté à la figure 2 sous la forme d'une impulsion I0; à la deuxième borne d'entrée 3, on applique un signal dit initial représenté à la figure 2 sous la forme d'une impulsion I1. A la borne de sortie 5 du dispositif apparaît le signal dit de démarrage représenté sous la forme d'une impulsion I2 à la figure 2. La figure 2 représente ainsi une séquence d'impulsion Sq qui se reproduit plus ou moins périodiquement. On a fait figurer en pointillé la première et la dernière impulsions de la séquence suivante et de la séquence précédente respectivement.

Le dispositif de l'invention a pour but de fournir l'impulsion I2 avant l'impulsion I0 et d'une manière telle que l'intervalle de temps TC qui sépare ces impulsions est parfaitement déterminé; cela quelles que soient les variations de temps séparant les impulsions I1 et I0. Toutefois, il faut mentionner que ceci n'est possible que dans la mesure où ces variations de temps fluctuent lentement par rapport à la cadence d'apparition des séquences d'impulsions.

Conformément à l'invention, le dispositif de la figure 1 est remarquable en ce qu'il est constitué par un asservissement formé d'un circuit de retard variable 10 muni d'une commande de retard 11 pour fournir le signal de démarrage (I2) en retardant le signal initial (I1), d'un comparateur 12 pour agir sur le retard variable du circuit 10 en comparant à une grandeur de consigne VC le signal de sortie d'un circuit-mémoire 14 et d'un circuit de mesure de temps 16 pour fournir au circuit-mémoire la mesure du temps qui s'écoule entre le signal de démarrage et le signal d'activation.

La grandeur de consigne VC fixe bien évidemment la durée TC.

Le fonctionnement du circuit de l'invention s'explique immédiatement de la façon suivante. L'asservissement va agir pour que la tension aux entrées du comparateur 12 soit la plus faible possible. Pour cela, le retard $\tau$ apporté par le circuit 10 est modifié dans une mesure telle que le temps qui sépare les signaux I2 et I0 ne diffère que de très peu de la valeur souhaitée TC déterminée par la grandeur VC.

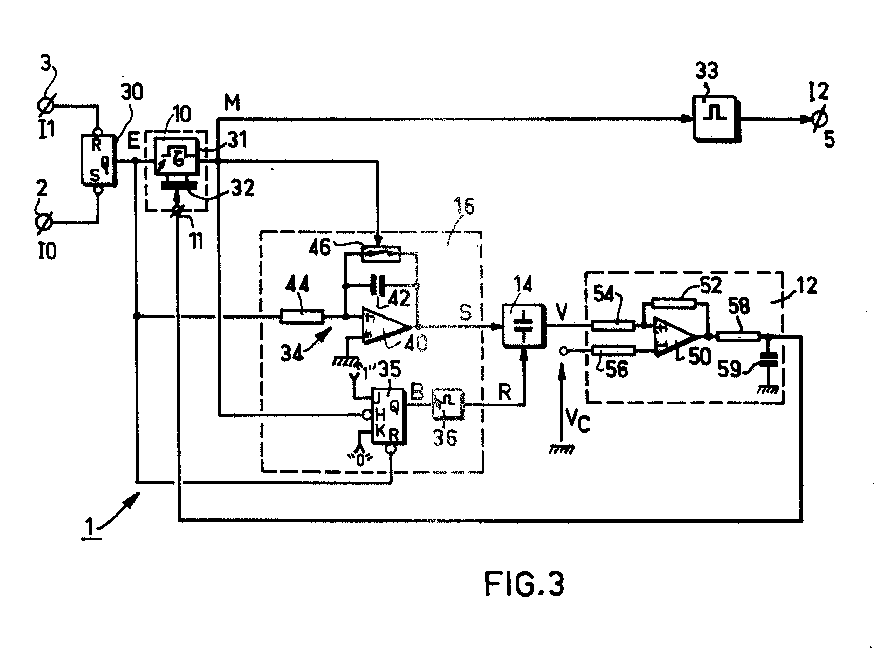

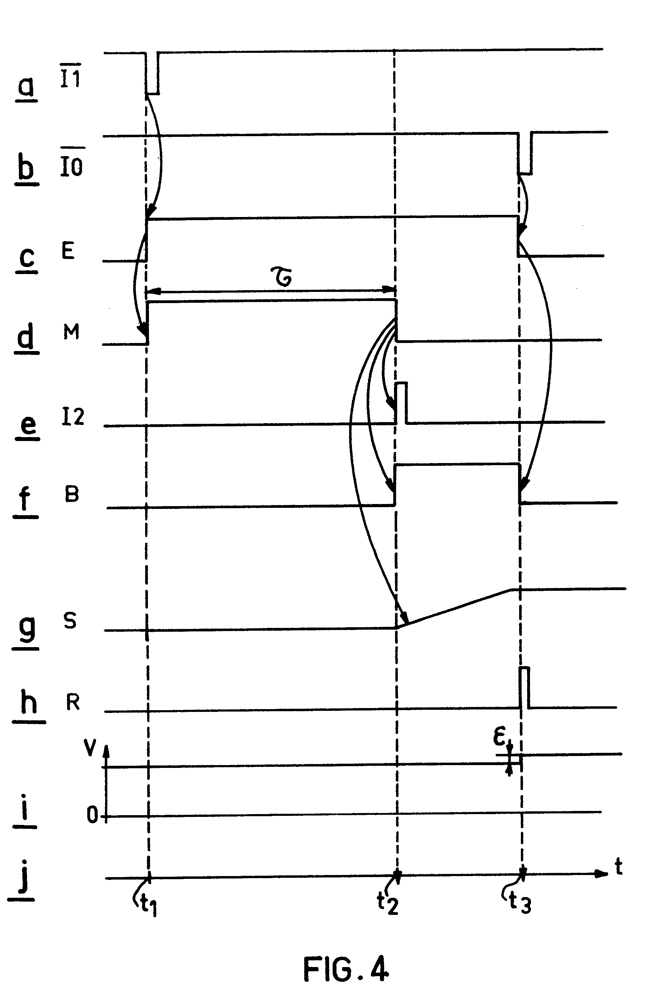

La figure 3 montre le mode de réalisation préféré d'un dispositif conforme à l'invention. Sur cette figure, les éléments communs avec ceux des figures précédentes portent les mêmes références. A la borne d'entrée 2, on applique le signal d'activation qui se présente, pour ce dispositif de la figure 3, sous le forme d'une impulsion négative notée I0 et représentée à la ligne b de la figure 4. Le signal appliqué à la borne 3 a aussi la forme d'une impulsion négative notée I1 et elle est représentée à la ligne a de la figure 4. Ces bornes d'entrées 2 et 3 sont connectées respectivement aux entrées S et R d'une bascule 30 de type RS. A la sortie Q de cette bascule 30, on a un signal E dont l'allure est montrée à la ligne c de la figure 4. Le circuit de retard variable 10 dont l'entrée est connectée à la sortie Q de la bascule 30 est constitué par un monostable de type conventionnel 31; la résistance qui fixe la durée de l'impulsion de ce monostable est constituée à partir du trajet source-drain d'un transistor à effet de champ 32 dont la grille constitue la commande 11 du circuit de retard 10. Ainsi, en fonction de la grandeur du signal appliqué à cette grille, la résistance présentée par ce trajet varie. Le signal M (ligne d figure 4) à la sortie du monostable se retrouve à la borne de sortie 5 après avoir traversé un formateur d'impulsions 33 dont les caractéristiques dépendent de l'utilisation souhaitée. Dans cet exemple, ce formateur est constitué par un monostable fournissant l'impulsion I2 montrée à la ligne e de la figure 4.

Le circuit de mesure de temps 16 se compose d'un intégrateur 34 et d'une bascule 35 du type JK à la sortie de laquelle apparaît un signal B représenté à la ligne f de la figure 4. A partir de ce signal, on élabore, au moyen d'un formateur d'impulsions 36, une courte impulsion destinée au circuit-mémoire 14, afin que celui-ci enregistre le signal de sortie de l'intégrateur 34. Le signal R fourni par ce formateur 36 est montré à la ligne h de la figure 4. L'intégrateur est formé de façon conventionnelle par un amplificateur opérationnel 40 dont l'entrée et la sortie sont interconnectées par un condensateur 42. Le signal de sortie S montré à la ligne g de la figure 4 est appliqué au circuit-mémoire 14 pour y être enregistré lorsque l'impulsion fournie par le formateur 36 apparaît. L'entrée de l'amplificateur 40 est reliée à la sortie de la bascule 30 par l'intermédiaire d'une résistance 44. Un circuit-interrupteur 46, constitué par exemple par le trajet source-drain d'un transistor à effet de champ, interconnecte les armatures du condensateur 42. Ce circuit 46 est mis en position ouverte ou fermée par le signal élaboré par le monostable 10; ce signal est pour cela appliqué à la grille du transistor constituant ce circuit 46. L'entrée H de la bascule 35 est reliée à la sortie du monostable 10, tandis que l'entrée R de cette bascule 34 est reliée à la sortie Q de la bascule 30.

Le comparateur 12 est formé à partir d'un amplificateur opérationnel 50 monté en amplificateur différentiel. Pour cela, il est prévu une résistance 52 interconnectant l'entrée et la sortie de cet amplificateur 50. Une entrée de cet amplificateur est connectée, par l'intermédiaire d'une résistance 54, à la sortie du circuit-mémoire 14 pour recevoir un signal V montré à la ligne i de la figure 4 et l'autre entrée reçoit, par l'intermédiaire d'une résistance 56, la tension de référence VC. Un filtre intégrateur monté en sortie de cet amplificateur opérationnel est constitué par une résistance 58 connectée à la sortie de l'amplificateur 50 et, par un condensateur 59, connecté en parallèle à la sortie du comparateur 12.

Le circuit-mémoire est formé à partir d'un circuit échantillonneur-maintien mieux connu en littérature anglosaxonne sous le nom de circuit «sample and hold».

Dans ce qui suit, l'explication du fonctionnement du dispositif de la figure 3 sera faite à l'aide de la figure 4.

A l'instant t1 (voir la ligne j de la figure 4) survient l'impulsion I1. Ceci impose que le signal E passe de la valeur «0» à la valeur «1». Cette montée du signal E déclenche le monostable 10 pour une durée τ. A l'instant t2, survient la retombée du signal fourni par le monostable 10; ceci a trois conséquences: la première est que l'impulsion I2 est élaborée par le formateur 33; la deuxième est que la bascule 35 change d'état et que son signal à sa sortie prend la valeur logique «1»; la troisième est que le circuit-interrupteur 46 est mis en position ouverte et que le signal S commence à croître.

A l'instant t3 survient l'impulsion I0, la bascule 30 est mise à l'état «0», le signal E prend donc cette valeur. Ceci entraîne que la bascule 35 est mise à zéro, le signal B prend cette valeur. Le front descendant du signal B provoque une impulsion du signal R, élaborée par le formateur 36, pour que la valeur du signal S soit emmagasinée dans le circuit-mémoire 14. Cette tension peut différer d'une petite valeur ε de la précédente (voir ligne i de la figure 4), l'asservissement va œuvrer pour que cette tension V tende vers VC.

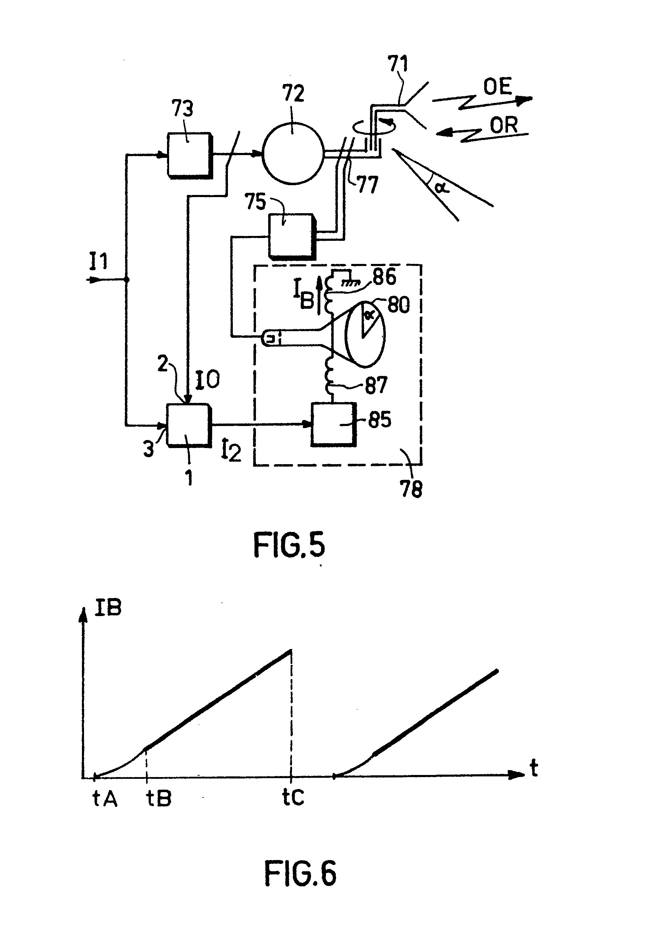

A la figure 5, on a représenté un radar comportant le dispositif 1 de l'invention, ce radar fonctionnant par impulsions. La référence 71 indique une antenne tournante pour émettre une onde OE et pour recevoir une onde OR réfléchie par les différents obstacles que peut rencontrer l'onde OE. Pour émettre cette ond OE, on utilise un magnétron 72 commandé par un modulateur 73. Le modulateur 73 est excité par le signal I1 fourni par un circuit non représenté.

L'onde OR captée par l'antenne 71 est dirigée vers un récepteur 75 via un duplexeur 77. Ce récepteur fournit l'information de luminance à une unité de visualisation 78, en réponse aux échos reçus; cette unité 78 comporte un tube cathodique 80 et une base de temps 85 qui alimente des bobines de déviation 86, 87, pour obtenir une présentation d'image en PPI (en anglais: Plan Position Indicator). Le tube cathodique fournit en coordonnées polaires une indication de l'environnement balayé par l'antenne 71. L'angle de rotation α (angle d'azimut ou de gisement) de l'antenne est reporté sur l'écran du tube tandis que l'on doit assurer un balayage en dent de scie selon le rayon-vecteur de la représentation en coordonnées polaires.

A la figure 6, on représente, en fonction du temps t, l'allure du courant IB qui traverse les bobines 86 et 87 prévues pour assurer un balayage linéaire selon le rayon-vecteur de la visualisation. Entre les instants TA où l'on démarre le balayage et TB, le courant IB n'est pas une fonction linéaire du temps, il ne l'est qu'entre les instants TB et TC.

Si l'instant tA correspond à l'émission de l'impulsion radar, c'est-à-dire l'impulsion I0, on se rend compte que tous les échos proches reçus entre cet instant tA et tB vont apparaître «tassés». Pour éviter ce tassement, on utilise la partie linéaire du balayage. Il faut donc pour cela démarrer le balayage en un temps antérieur à l'apparition de l'impulsion radar; ce temps antérieur doit être bien déterminé.

Le dispositif de l'invention 1 permet, par l'impulsion I2, de déclencher la base de temps 85 en un temps bien déterminé avant qu'apparaisse l'impulsion I0. Ainsi, le dispositif de l'invention permet de s'affranchir du temps de réponse du modulateur 73. En effet, ce temps dépend de paramètres lentement variables tels que les variations de la tension d'alimentation et changement de température.

**Revendications**

1. Dispositif de synchronisation destiné notamment à une unité de visualisation d'un radar à impulsions, dispositif comportant une borne de sortie pour fournir un signal dit de démarrage à un instant bien déterminé avant un signal dit d'activation qui est appliqué à une première de ses bornes et dont l'apparition dépend d'un signal initial appliqué à une deuxième des bornes d'entrée antérieurement au signal de démarrage, ces différents signaux survenant durant des laps de temps successifs, caractérisé en ce qu'il est constitué par un asservissement formé d'un circuit de retard variable muni d'une commande de retard pour fournir le signal de démarrage en retardant le signal initial, d'un comparateur pour agir sur ladite commande en comparant à une grandeur de consigne le signal de sortie d'un circuit-mémoire et d'un circuit de mesure de temps pour fournir au circuit-mémoire la mesure du temps qui s'écoule entre le signal de démarrage et le signal d'activation, ladite grandeur de consigne correspondant à l'intervalle compris entre ledit instant bien déterminé et ledit signal d'activation.

2. Dispositif de synchronisation selon la revendication 1, caractérisé en ce que le circuit de retard variable est constitué par un monostable dont la résistance, destinée à fixer la durée de basculement, est formée à partir d'un trajet source-drain d'un transistor à effet de champ dont la grille constitue la commande de retard.

3. Dispositif de synchronisation selon la revendication 1 ou 2, caractérisé en ce que le comparateur est formé à partir d'un amplificateur différentiel dont une entrée reçoit le signal de sortie du circuit-mémoire et dont une autre reçoit une tension de référence qui fixe ledit instant déterminé.

4. Dispositif de synchronisation selon l'une des revendications 1 à 3, caractérisé en ce que le circuit de mesure de temps est formé à partir d'un intégrateur connecté pour fournir une tension croissant continûment entre l'apparition du signal de démarrage et du signal d'activation et d'un circuit pour fournir une impulsion d'enregistrement destinée au circuit-mémoire pour l'enregistrement du signal de sortie de l'intégrateur.

5. Dispositif de synchronisation selon l'une des revendications 1 à 4, caractérisé en ce que le circuit-mémoire est formé à partir d'un circuit échantillonneur-maintien.

6. Radar du type comportant un modulateur dont l'entrée reçoit un signal initial pour déclencher le modulateur et à la sortie duquel apparaît un signal d'activation pour un magnétron destiné à fournir dans l'espace des impulsions de très haute fréquence et comportant pour visualiser les échos desdites impulsions une unité de visualisation formée d'un tube cathodique à balayage magnétique et munie d'une entrée pour un signal de démarrage, caractérisé en ce qu'il comporte un dispositif selon l'une des revendications 1 à 5 dont la sortie est connectée à l'entrée pour le signal de démarrage de ladite unité de visualisation et dont les première et deuxième entrées sont reliées respectivement à l'entrée et à la sortie dudit modulateur.

**Claims**

1. A synchronizing arrangement intented more specifically for a display unit of a pulsed radar device, the arrangement having an output terminal for supplying a what is commonly referred to as a starting signal at a well-determined instant before a what is commonly referred to as an activation signal applied to a first input of its plurality of inputs and whose appearance depends on an initial signal applied to a second terminal of its plurality of input terminals before the starting signal, these different signals occurring during consecutive time intervals, characterized in that it is constituted by a control formed by a circuit having a variable delay and a delay control for supplying the starting signal whilst delaying the initial signal, a comparator to which said control responds by comparing the output signal of a memory circuit to a target value, and a time measuring circuit for applying to the memory circuit the time measured during the interval between the starting signal and the activation signal, said target value corresponding to the interval comprised between said well-determined instant and said activation signal.

2. A synchronizing arrangement as claimed in Claim 1, characterized in that the variable-delay circuit is constituted by a monostable trigger circuit whose resistance, intended to fix the duration of the interval in which the monostable circuit changes state, is formed by a source-drain path of a field effect transistor whose gate constitutes the delay control.

3. A synchronizing arrangement as claimed in Claim 1 or 2, characterized in that the comparator comprises a differential amplifier an input of which receives the output signal of the memory circuit and an other input of which receives a reference voltage which determines said predetermined instant.

4. A synchronizing arrangement as claimed in anyone of the Claims 1 to 3, characterized in that the time mesuring circuit comprises an integrator which is connected such that it produces a continuously increasing voltage between the appearance of the starting signal and the activation signal, and a circuit for producing a recording pulse intended for the memory circuit for recording the intergrator output signal.

5. A synchronizing arrangement as claimed in anyone of the Claims 1 to 4, characterized in that the memory circuit comprises a sample-and-hold circuit.

6. A radar of the type comprising a modulator whose input receives an initial signal for triggering the modulator and at whose output an energizing signal appears for activating a magnetron intended to produce very high frequency pulses in space, and comprising for displaying the echos of said pulses a delay unit formed by a magnetic sweep cathode tube and having an input for a starting signal, characterized in that it comprises an arrangement as claimed in anyone of the Claims 1 to 5 whose output is connected to the input for the starting signal of said display unit and whose first and second inputs are connected to the input and the output of said modulator, respectively.

**Patentansprüche**

1. Synchronisierungsanordnung, insbesondere für ein Lichtgerät eines Impulsradars, mit einer Ausgangsklemme zur Lieferung eines Startsignals zu einem bestimmten Zeitpunkt vor einem Aktivierungssignal, das einer ersten ihrer Klemmen zugeführt wird und dessen Erscheinen von einem Anfangssignal nach einer zweiten der Eingangsklemmen vor dem Startsignal abhängig ist, wobei diese verschiedenen Signale während aufeinanderfolgender Zeitabschnitte erscheinen, dadurch gekennzeichnet, dass die Synchronisationsanordnung aus einer Steuerung besteht, die eine variable Verzögerungsschaltung mit einer Verzögerungssteuerung zur Lieferung des Startsignals bei gleichzeitiger Verzögerung des Anfangssignals, und einen Komparator zur Beeinflussung dieser Steuerung durch den Vergleich der Ausgangssignale einer Speicherschaltung und einer Zeitmessschaltung mit einer Sollgrösse zur Übertragung der Zeitmessung auf den Speicher enthält, wobei diese Zeitmessung zwischen dem Startsignal und dem Aktivierungssignal verläuft, wobei dieser Sollwert dem Intervall entspricht, das zwischen dem bestimmten Zeitpunkt und dem Aktivierungssignal auftritt.

2. Synchronisationsanordnung nach Anspruch 1, dadurch gekennzeichnet, dass die variable Verzögerungsschaltung aus einem monostabilen Multivibrator besteht, dessen Widerstand zur Fixierung der Ausgleichsdauer durch eine Quelle-Drain-Strecke eines Feldeffekttransistors gebildet wird, dessen Gitter die Verzögerungssteuerung darstellt.

3. Synchronisationsanordnung nach Anspruch 1 oder 2, dadurch gekennzeichnet, dass der Komparator aus einem Differenzverstärker besteht, von dem ein Eingang das Ausgangssignal des Speichers und ein anderer Eingang einer Bezugsspannung empfängt, die den bestimmten Zeitpunkt festlegt.

4. Synchronisationsanordnung nach einem der Ansprüche 1 bis 3, dadurch gekennzeichnet, dass die Zeitmessschaltung aus einem Integrator, der zur Lieferung einer Spannung angeschlossen ist, die zwischen dem Erscheinen des Startsignals und des Aktivierungssignals ständig wächst, und einer Schaltung zur Lieferung eines Aufzeichnungsimpulses zum Speicher zum Aufzeichnen des Ausgangssignals des Integrators besteht.

5. Synchronisationsanordnung nach einem der Ansprüche 1 bis 4, dadurch gekennzeichnet, dass der Speicher aus einer Abtast-Halteschaltung besteht.

6. Radargerät vom Typ mit einem Modulator, dessen Eingang ein Anfangssignal zum Abschalten des Modulators empfängt und an dessen Ausgang ein Aktivierungssignal für eine Magnetfeldröhre zum Ausstrahlen von Impulsen mit sehr hoher Frequenz in den Raum erscheint, und mit einer Bildwiedergabeeinheit mit einer Elektronenstrahlröhre mit magnetischer Abtastung zur bildlichen Darstellung des Echos dieser Impulse enthält, und diese Einheit mit einem Eingang für ein Startsignal versehen ist, dadurch gekennzeichnet, dass das Radargerät eine Anordnung nach einem der Ansprüche 1 bis 5 enthält, deren Ausgang mit dem Eingang für das Startsignal der genannten Bildwiedergabeeinheit verbunden ist und deren erste und zweite Eingänge mit dem Eingang bzw. dem Ausgang des genannten Modulators verknüpft sind.

FIG.1

FIG.2

FIG.3

FIG. 4

FIG.5

FIG.6